(19)

Europäisches
Patentamt
European
Patent Office
Office européen
des brevets

(11) **EP 3 288 166 A1**

(12) **EUROPEAN PATENT APPLICATION**
published in accordance with Art. 153(4) EPC

(43) Date of publication:
**28.02.2018 Bulletin 2018/09**

(51) Int Cl.:
**H02M 7/48** (2007.01)          **H02J 1/00** (2006.01)
**H02J 3/36** (2006.01)

(21) Application number: **16782844.1**

(22) Date of filing: **09.02.2016**

(86) International application number:
**PCT/JP2016/053799**

(87) International publication number:
**WO 2016/170822 (27.10.2016 Gazette 2016/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **23.04.2015 JP 2015088148**

(71) Applicants:
• **Kabushiki Kaisha Toshiba
Minato-ku,
Tokyo 105-8001 (JP)**
• **Toshiba Energy Systems & Solutions
Corporation
Saiwai-ku
Kawasaki-shi
Kanagawa 2120013 (JP)**

(72) Inventors:
• **KINOSHITA, Yoshihito
Tokyo 105-8001 (JP)**
• **NORO, Yasuhiro
Tokyo 105-8001 (JP)**
• **NAOI, Shinya
Tokyo 105-8001 (JP)**
• **WANG, Mian
Tokyo 105-8001 (JP)**
• **TAMURA, Yuuji
Tokyo 105-8001 (JP)**

(74) Representative: **Awapatent AB
Junkersgatan 1
582 35 Linköping (SE)**

(54) **CONTROL DEVICE FOR POWER CONVERTER**

(57)    Provided is a control device for a power converter which promptly suppresses an oscillation when a DC current oscillates, and which stabilizes a DC power transmission. A control device Cb is for a power converter 2b that is a inverter converting DC power into AC power between two power converters 2a and 2b connected with each other via a DC line 3a, and includes a constant margin angle control circuit 10b controlling so as to maintain the constant margin angle for the power converter, a constant voltage control circuit 11b controlling so as to cause the DC voltage of the DC line 3a to be the predetermined DC voltage reference value, a constant current control circuit 12b controlling so as to cause the DC current of the DC line 3a to be the predetermined DC current reference value, an oscillation suppressing circuit 20 outputting the differential value of the DC current at the inverter side, an adder 15b adding the output by the constant voltage control circuit 11b and the output by the oscillation suppressing circuit 20, and a minimum value selecting circuit 12b selecting the minimum value among the output by the constant margin angle control circuit 10b, the output by the adder 15b, and the output by the constant current control circuit 12b, and setting the selection result as the control angle for the power converter 2b.

FIG. 1

EP 3 288 166 A1

**Description**

FIELD

Embodiments of the present disclosure relate to a control device for a power converter applied to, for example, DC power transmission.

BACKGROUND

In DC power transmission facilities, two power converters are connected to respective AC systems via respective transformers. The two power converters configure an AC-DC converter and an inverter, respectively, and those are connected with each other via a DC reactor and a DC line. According to the above structure, AC power from one AC system is converted into DC power by the AC-DC converter, and is transmitted via the DC reactor and the DC line. The transmitted DC power is converted into AC power by the inverter.

In DC power transmission, the current of a DC circuit for DC power transmission may oscillate due to control instability, etc. Hence, control devices for a power converter are provided with a circuit that suppresses an oscillation of a DC current. When, for example, the DC current at the AC-DC converter side oscillates due to a system fault, etc., the following scheme of cancelling the oscillation has been proposed; detecting the magnitude of the oscillation component and producing an oscillation of the DC current with an inverted phase relative to the oscillation of the input DC current by an oscillation suppressing circuit.

CITATION LIST

PATENT LITERATURES

Patent Document 1: JP H09-046897 A

NON-PATENT LITERATURES

Non-Patent Document 1: Takehiko MACHIDA, "DC power transmission optics", the TOKYO DENKI University press, January 30, 1999, p. 151-154

SUMMARY

In recent years, along with the extension of the power transmission distance by DC power transmission, the power transmission cables which are DC lines are also extended. When a DC line is installed in ocean, in accordance with a power transmission distance, the electrostatic capacitance of a DC line increases. As described above, the DC circuit for DC power transmission includes a DC reactor and a DC line, etc. In this case, when the electrostatic capacitance of the DC line increases, the resonant frequency of the DC circuit due to the electrostatic capacitance of the DC reactor and that of the power transmission cable decreases. When this resonant frequency decreases down to around the frequency where a normal operation of the DC power transmission is operated, the DC current is affected by resonance, and may become oscillatory and unstable.

According to conventional DC power transmission facilities, the DC current at the inverter side is not taken into consideration for control. Hence, when conventional power converters are applied to a long-distance power transmission, and the DC current keenly changes due to a system fault and a stepwise change in the DC current setting value, etc., a resonance of the DC circuit is induced, the DC current at the inverter side oscillates, possibly making the DC circuit unstable.

Embodiments of the present disclosure have been proposed in order to address the foregoing problems of conventional technologies. The objective is to provide a control device for a power converter which promptly suppresses an oscillation when a DC current oscillates, and which stabilizes a DC power transmission.

In order to accomplish the above objective, a control device according to an embodiment of the present disclosure is for a power converter that is an inverter converting DC power into AC power between two power converters connected with each other via a DC line, and the control device includes :

a constant margin angle control circuit controlling so as to maintain a constant margin angle for the power converter;
a constant voltage control circuit controlling so as to cause a DC voltage of the DC line to be a predetermined DC voltage reference value;
a constant current control circuit controlling so as to cause a DC current of the DC line to be a predetermined DC current reference value;
an oscillation suppressing circuit outputting a differential value of the DC current at the inverter side;
an adder adding an output by the constant voltage control circuit and an output by the oscillation suppressing circuit; and
a minimum value selecting circuit selecting a minimum value among an output by the constant margin angle control circuit, an output by the adder, and an output by the constant current control circuit, and setting the selection result as a control angle for the power converter.

BRIEF DESCRIPTION OF DRAWINGS

FIG. 1 is a block diagram illustrating an example structure of a control device for a power converter according to a first embodiment;
FIG. 2 is a block diagram illustrating an example structure of a control device for a power converter according to a second embodiment;
FIG. 3 is a circuit diagram illustrating an equivalent circuit of a DC system; and
FIG. 4 is a block diagram illustrating an example structure of a control device for a power converter according to a third embodiment.

DETAILED DESCRIPTION

[First Embodiment]

[1. Structure]

(Power System)

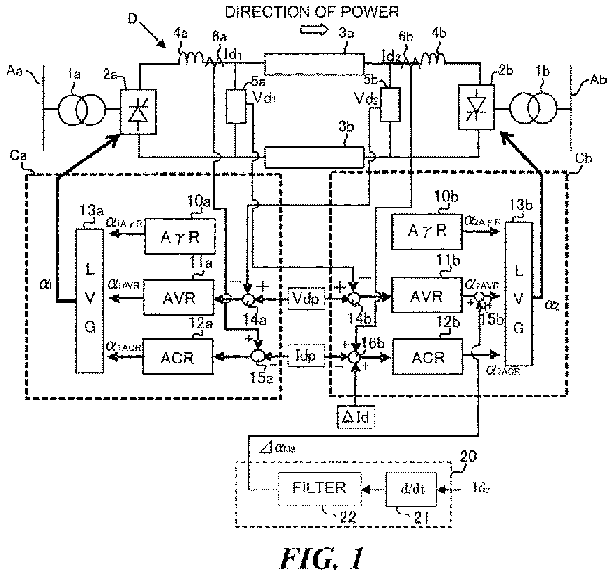

A first embodiment according to the present disclosure will be described with reference to figures. FIG. 1 is a block diagram illustrating an example structure of a control device for a power converter according to this embodiment. First, an outline of the power system to which the control device for the power converter is applied will be described. The power system includes AC systems Aa, Ab, and a DC system D.
The AC systems Aa and Ab are power systems that supply AC power, and the AC system Ab is a power transmitting side, while the AC system Ab is a power receiving side. In addition, both the AC systems Aa and Ab can be the power transmitting side or the power receiving side. The AC systems Aa and Ab each include facilities, such as a power supply, a load, and an AC lines. A transformer 1a is connected to the AC system Aa, and a transformer 1b is connected to the AC system Ab, respectively.
The DC system D is a power system that supplies DC power, and has a one end connected to the AC system Aa via the transformer 1a. The other end is connected to the AC system Ab via the transformer 1b. The DC system D is provided with DC power transmission facilities. The transformers 1a and 1b are each a converter transformer that supplies a voltage to power converters 2a and 2b to be described later.

(DC Power Transmission Facilities)

The DC power transmission facilities establish a link between the AC systems Aa, Ab and the DC system D. The DC power transmission facilities include power converters 2a and 2b, DC lines 3a and 3b, DC reactors 4a and 4b, voltage detectors 5a and 5b, and current detectors 6a and 6b. The power converters 2a and 2b are each a separate-excitation type converter that utilizes a thyristor as a semiconductor device. The power converter 2a is connected to a control device Ca, and the power converter 2b is connected to a control device Cb.
The power converter 2a is an AC-DC converter, and is connected to the AC system Aa via the transformer 1a. The power converter 2a converts AC power into DC power by turning ON the thyristor in accordance with a turn-ON signal from the control device Ca. In addition, the power converter 2b is an inverter, and is connected to the AC system Ab via the transformer 1b. The power converter 2b converts DC power into AC power by turning ON the thyristor in accordance with a turn-ON signal from the control device Cb. When the flow of power is inverted, the power converter 2a can be an inverter, and the power converter 2b can be an AC-DC converter.
The power converter 2a and the power converter 2b are connected to each other via the DC lines 3a and 3b. The DC reactor 4a is provided at the DC side of the power converter 2a in the DC line 3a. The DC reactor 4b is provided at the DC side of the power converter 2b in the DC line 3a. The DC reactors 4a and 4b are each a smoothing reactor which performs smoothing on a DC current and suppresses a DC eddy current. According to the above structure, the DC power converted by the power converter 2a is smoothed by the DC reactor 4a, is transmitted via the DC lines 3a and 3b, and is again smoothed by the DC reactor 4b, and eventually converted into AC power by the power converter 2b.

The voltage detectors 5a and 5b are each a sensor that detects the DC voltage across both ends of the DC line 3a. The voltage detector 5a is provided between the end of the DC line 3a at the power-converter-2a side and the DC reactor 4a. A DC voltage $Vd_1$ detected by the voltage detector 5a is output to the control device Cb. The voltage detector 5b is provided between the end of the DC line 3a at the power-converter-2b side and the DC reactor 4b. A DC voltage $Vd_2$ detected by the voltage detector 5b is output to the control device Ca.

The current detectors 6a and 6b are each a sensor that detects a DC current between both ends of the DC line 3a. The current detector 6a is provided between the end of the DC line 3a at the power-converter-2a side and the DC reactor 4a. A DC current $Id_1$ detected by the current detector 6a is output to the control device Ca. The current detector 6b is provided between the end of the DC line 3a at the power-converter-2b side and the DC reactor 4b. A DC current $Id_2$ detected by the current detector 6b is output to the control device Cb.

(Control Device for Power Converter)

Next, a structure of the control device Ca, Cb of the power converter 2a, 2b will be described in detail. First, control device Ca controls the power converter 2a, and includes a constant margin angle control circuit 10a, a constant voltage control circuit 11a, a constant current control circuit 12a, and a minimum value selecting circuit 13a. The control device Cb controls the power converter 2b, and includes a constant margin angle control circuit 10b, a constant voltage control circuit 11b, a constant current control circuit 12b, and a minimum value selecting circuit 13b. That is, the power converters 2a and 2b basically employ the same structure.

In addition, the control device Ca includes adders 14a and 15a. The control device Cb includes adders 14b, 15b, and 16b. Each adder is an arithmetic processing unit that adds a value input with a polarity indicated in FIG. 1. In addition, when the polarity is negative, the adder can also be considered as a subtractor.

(Control Device Ca)

The constant margin angle control circuit 10a calculates a control angle that maintains a margin angle necessary for a commutation operation. Since the power converter 2a is a separate excitation type converter, when the margin angle for a converter decreases, a commutation failure is likely to occur. Hence, the constant margin angle control circuit 10a performs a control of ensuring the margin angle during the reverse converter operation, and suppressing a commutation failure of the converter. A control angle $\alpha_{1A\gamma R}$ calculated by the constant margin angle control circuit 10a is output to the minimum value selecting circuit 13a.

The constant voltage control circuit 11a performs a control of maintaining the DC voltage $Vd_2$ as constant. Input to the constant voltage control circuit 11a is a value obtained by adding the DC voltage $Vd_2$ detected by the voltage detector 5b and a predetermined DC voltage reference value Vdp by the adder 14a. The adder 14a calculates a difference of the DC voltage $Vd_2$ from the DC voltage reference value Vdp. The constant voltage control circuit 11a controls the DC voltage $Vd_2$ so as to be the value of the DC voltage reference value Vdp. A control angle $\alpha_{1AVR}$ calculated by the constant voltage control circuit 11a is output to the minimum value selecting circuit 13a.

The constant current control circuit 12a performs a control of maintaining the DC current $Id_1$ as constant. Input to the constant current control circuit 12a is a value obtained by adding the DC current $Id_1$ detected by the current detector 6a and a predetermined DC current reference value Idp by the adder 15a. The adder 15a calculates a difference of the DC current reference value Idp from the DC current $Id_1$. The constant current control circuit 12a controls the DC current $Id_1$ so as to be a value of the DC current reference value Idp. A control angle $\alpha_{1ACR}$ calculated by the constant current control circuit 12a is output to the minimum value selecting circuit 13a.

The minimum value selecting circuit 13a compares, for example, multiple values, and determines the large-small relationship of the numerical values. The minimum value selecting circuit 13a selects the minimum value among the control angles input from the constant margin angle control circuit 10a, the constant voltage control circuit 11a, and the constant current control circuit 12a. An output $\alpha_1$ by the minimum value selecting circuit 13a is a phase control angle for the gate pulse to the power converter 2a, and the power converter 2a is controlled based on this control angle.

(Control Device Cb)

The constant margin angle control circuit 10b calculates a control angle for maintaining the margin angle necessary for a commutation operation. Since the power converter 2b is a separate excitation type converter, when the margin angle for the converter decreases, a commutation failure is likely to occur. Hence, the constant margin angle control circuit 10b performs a control of ensuring the margin angle during the reverse converter operation, and suppressing a commutation failure of the converter. A control angle $\alpha_{2A\gamma R}$ calculated by the constant margin angle control circuit 10b is output to the minimum value selecting circuit 13b.

The constant voltage control circuit 11b performs a control of maintaining the DC voltage $Vd_1$ as constant. Input to the constant voltage control circuit 11b is a value obtained by adding the DC voltage $Vd_1$ detected by the voltage detector 5a and the predetermined DC voltage reference value Vdp by the adder 14b. The adder 14b calculates a difference of the DC voltage $Vd_1$ from the DC voltage reference value Vdp. The constant voltage control circuit 11b controls the DC voltage $Vd_1$ so as to be the value of the DC voltage reference value Vdp. The control angle $\alpha_{2AvR}$ calculated by the constant voltage control circuit 11b is output to the adder 15b. An output $\Delta\alpha_{Id2}$ by an oscillation suppressing circuit 20 to be described later is also input to the adder 15b. The adder 15b adds the control angle $\alpha_{2AvR}$ of the constant voltage control circuit 11b and the output $\Delta\alpha_{Id2}$ of the oscillation suppressing circuit 20, and outputs the addition result to the minimum value selecting circuit 13b.

The output $\Delta\alpha_{Id2}$ by the oscillation suppressing circuit 20 may be input to the adder 14b. When the adder 14b is applied, the reverse characteristic of the constant voltage control circuit 11b, i.e., the inverse of the transfer function of the constant voltage control circuit 11b may be applied, and the same characteristic as that of the case in which data is input the adder 15b may be achieved.

The constant current control circuit 12b performs a control of maintaining the DC current $Id_2$ as constant. Input to the constant current control circuit 12b is a value obtained by adding the DC current $Id_2$ detected by the current detector 6b, the predetermined DC reference value Idp, and a current margin $\Delta$Id by the adder 16b. The adder 16b adds the current margin $\Delta$Id to a difference of the DC current $Id_2$ from the DC current reference value Idp. The constant current control circuit 12b controls the DC current $Id_2$ so as to be the value of the DC current reference value Idp. The control angle $\alpha_{2ACR}$ calculated by the constant current control circuit 12b is output to the minimum value selecting circuit 13b.

The minimum value selecting circuit 13b compares, for example, multiple values, and determines the large-small relationship of the numerical values. The minimum value selecting circuit 13b selects the minimum value among the control angles input from the constant margin angle control circuit 10b, the adder 15b, and the constant current control circuit 12b. An output $\alpha_2$ by this minimum value selecting circuit 13b is a phase control angle for the gate pulse to the power converter 2b, and the power converter 2b is controlled based on this phase control angle.

(Oscillation Suppressing Circuit)

The oscillation suppressing circuit 20 suppresses oscillation in the DC current, and includes an approximation differential value calculating circuit 21, and a filter circuit 22. The DC current $Id_2$ is input to the approximation differential value calculating circuit 21. The approximation differential value calculating circuit 21 calculates a differential value $d(Id_2)/dt$ of the DC current $Id_2$. The calculated differential value $d(Id_2)/dt$ is input to the filter circuit 22.

The filter circuit 22 allows only the frequency band within the predetermined range to pass. The filter circuit 22 is configured to cause the frequency band at which a suppression of an oscillation of the DC current $Id_2$ is desired to pass. The filter circuit 22 may be achieved by, for example, a circuit that includes a coil, a reactor, and a capacitor.

The filter circuit 22 is applied to the input differential values $d(Id_2)/dt$, and causes the differential value $d(Id_2)/dt$ of the frequency band at which a suppression of an oscillation of the DC current $Id_2$ is desired to pass. An output $\Delta\alpha Id_2$ by the filter circuit 22 is output to the adder 15b. As described above, the adder 15b adds the outputs by the constant voltage control circuit 11b and the oscillation suppressing circuit 20, and outputs the addition result to the minimum value selecting circuit 13b.

[2. Operation]

An operation of the control device for the power converter according to this embodiment will be described with reference to FIG. 1.

(Normal Operation)

According to this embodiment, as described above, the AC system Aa is the transmitting side, and the AC system Ab is the power receiving side, the power converter 2a operates as the Ac-DC converter, and the power converter 2b operates as the inverter. In this case, in control device Ca, the control angle of the constant current control circuit 12a becomes smaller than the output by the constant margin angle control circuit 10a and that by the constant voltage control circuit 11a. Hence, the minimum value selecting circuit 13a outputs the control angle of the constant current control circuit 12a. The power converter 2a performs a constant current operation that maintains the DC current $Id_1$ as constant based on the control angle of the constant current control circuit 12a.

In addition, in the control device Cb, when the AC voltage of the AC system Ab is near the rated value, the control angle of the constant voltage control circuit 11b becomes smaller than the output by the constant margin angle control circuit 10b and that by the constant current control circuit 12b. When there is no oscillation in the DC current $Id_2$, since the differential value d ($Id_2$) /dt of the DC current $Id_2$ becomes substantially zero in the approximation differential value calculating circuit 21 of the oscillation suppressing circuit 20, the output $\Delta\alpha Id_2$ by the filter circuit 22 also becomes substantially zero. Hence, even if the adder 15b adds the output $\Delta\alpha Id_2$ by the oscillation suppressing circuit 20 to the output by the voltage control circuit 11b, the value substantially remains unchanged. Accordingly, the minimum value selecting circuit 13b outputs the control angle of the constant voltage control circuit 11b. The power converter 2b performs a constant voltage operation of maintaining the DC voltage $Vd_1$ as constant based on the control angle of the constant voltage control circuit 11b.

(When Oscillation Occurs)

In contrast, when an oscillation occurs in the DC current $Id_2$, since the differential value d($Id_2$)/dt becomes a value in accordance with the oscillation, the output $\Delta\alpha_{Id2}$ by the oscillation suppressing circuit 20 is to be added to the output $\alpha_{2AVR}$ by the voltage control circuit 11b by the adder 15b. In this case, there is a relationship indicated by the following formula 1 between the control angle $\alpha_2$ for the power converter 2b obtained by adding the output $\Delta\alpha_{Id2}$ by the oscillation suppressing circuit 20 to the output $\alpha_{2AVR}$ by the voltage control circuit 11b, and the DC voltage $Vd_2$ of the power converter 2b. In the formula 1, $V_{ac2}$ is a bus-line voltage of the AC system Ab, $X_2$ is a reactance of the transformer 1b, and the control angle for the power converter 2b becomes $\alpha_2 > \pi/2$.

[Formula 1]

$$Vd_2 = -\left(\frac{3\sqrt{2}}{\pi} V_{ac2}\, cos\alpha_2 - \frac{3}{\pi} X_2\, Id_2\right)$$

The output $\Delta\alpha_{Id2}$ by the oscillation suppressing circuit 20 becomes $\Delta\alpha_{Id2} > 0$ when the oscillation waveform of the DC voltage $Id_2$ is increasing. Hence, the control angle $\alpha_2$ in the formula 1 is increased, and this acts so as to increase the DC voltage $Id_2$. In addition, since the magnitude of the DC current $Id_2$ depends on the DC voltage $Vd_1$ - the DC voltage $Vd_2$, the DC current $Id_2$ decreases when the DC voltage $Vd_2$ increases.
In contrast, the output $\Delta\alpha_{Id2}$ by the oscillation suppressing circuit 20 becomes $\Delta\alpha_{Id2} < 0$ when the oscillation waveform of the DC current $Id_2$ is decreasing. Hence, the control angle $\alpha_2$ in the formula 1 is decreased, and this acts so as to decrease the DC voltage $Vd_2$, and increase the DC current $Id_2$. As described above, the output $\Delta\alpha_{Id2}$ by the oscillation suppressing circuit 20 changes the DC current $Id_2$ so as to be decreased when the oscillation waveform is increasing, and to be increased when the oscillation waveform is decreasing. Therefore, oscillation is canceled by including the reverse phase component of the DC current $Id_2$ in the output by the constant voltage control circuit 11b.

[3. Action and Effect]

The action and effect of the above embodiment are as follows.

(1) The control device Cb is for the power converter 2b that is an inverter converting DC power into AC power between the two power converters 2a and 2b connected with each other via the DC line 3a, and includes the constant margin angle control circuit 10b controlling so as to maintain the constant margin angle for the power converter 2b, the constant voltage control circuit 11b controlling so as to cause the DC voltage of the DC line 3a to be the predetermined DC voltage reference value, the constant current control circuit 12b controlling so as to cause the DC current of the DC line 3a to be the predetermined DC current reference value, the oscillation suppressing circuit 20 outputting the differential value of the DC current at the inverter side, the adder 15b adding the output by the constant voltage control circuit 11b and the output by the oscillation suppressing circuit 20, and the minimum value selecting circuit 12b selecting the minimum value among the output by the constant margin angle control circuit 10b, the output by the adder 15b, and the output by the constant current control circuit 12b, and setting the selection result as the control angle for the power converter 2b.
According to the above structure, the output $\Delta\alpha_{Id2}$ obtained by applying the approximation differentiation and the filter to the DC current $Id_2$ at the power converter 2b by the oscillation suppressing circuit 20, is applied to the output by the constant voltage control circuit 11b. When the DC current $Id_2$ oscillates, while the power converter 2b performs the constant voltage control, the DC voltage $Vd_2$ is changed so as to cause the DC current $Id_2$ to oscillate reversely relative to the oscillation of the DC current $Id_2$. That is, the reverse phase component by the change in the DC

current Id$_2$ is applied to the input of constant voltage control. Therefore, when the DC current Id$_2$ oscillates, the oscillation is promptly suppressed, thereby stabilizing DC power transmission.

(2) The oscillation suppressing circuit 20 includes the approximation differential value calculating circuit 21 calculating the differential value of the DC current at the inverter side, and the filter circuit 22 outputting the differential value of the frequency band at which a suppression of an oscillation is desired in the DC current at the inverter side. The differential value calculated by the approximation differential value calculating circuit 21 is added to the constant voltage control circuit 11b, and thus the damping performance increases, facilitating an oscillating to attenuate.

[Second Embodiment]

[1. Structure]

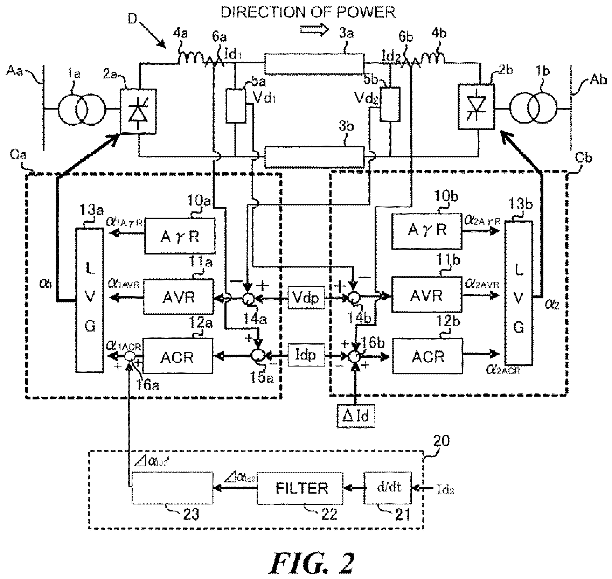

The structure of a control device for a power converter according to a second embodiment is basically the same as that of the first embodiment. According to the control device for the power converter of this embodiment, however, as illustrated in FIG. 2, in the control device Ca for the power converter 2a, the control angle $\alpha_{1ACR}$ calculated by the constant current control circuit 12a is output to the adder 16a. The output $\Delta\alpha_{Id2}$' by the oscillation suppressing circuit 20 to be described later is also input to the adder 16a. The adder 16a adds the control angle $\alpha_{1ACR}$ of the constant current control circuit 12a and the output $\Delta\alpha_{Id2}$' by the oscillation suppressing circuit 20, and outputs the addition result to the minimum value selecting circuit 13a.

The output $\Delta\alpha_{Id2}$' by the oscillation suppressing circuit 20 may be input to the adder 15a. When the adder 15a is applied, the reverse characteristic of the constant current control circuit 12a, i.e., the inverse of the transfer function of the constant current control circuit 12a is applied, and the same characteristic as that of the case in which data is input to the adder 16a is achieved.

As described above, the output by the oscillation suppressing circuit 20 of this embodiment is input to the control device Ca for the power converter 2a. The oscillation suppressing circuit 20 includes a DC circuit characteristic calculating circuit 23. The output $\Delta\alpha_{Id2}$ by the filter circuit 22 is input to the DC circuit characteristic calculating circuit 23.

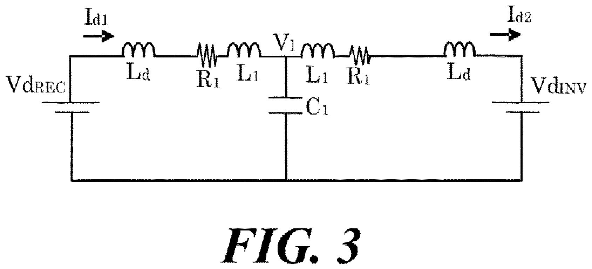

The DC circuit characteristic calculating circuit 23 is a filter circuit that has a characteristic which is a reverse characteristic of the transfer function from the DC voltage Vd$_1$ at the power-converter-2a side to the DC current Id$_2$. First, the transfer function that indicates the characteristic at which the DC voltage Vd$_1$ acts on the DC current Id$_2$ will be described. FIG. 3 illustrates the equivalent circuit of the DC system D. The symbols in FIG. 3 indicate the following values.

Vd$_{REC}$: DC voltage Vd$_1$ at the power-converter-2a side (AC-DC converter).
Vd$_{INV}$: DC voltage Vd$_2$ at the power-converter-2b side (inverter).
C$_l$: Electrostatic capacitance value of the DC line.
R$_l$: Resistance value of the DC line.
L$_l$: Reactor value of the DC line.
L$_d$: Reactor value of the DC reactor.
V$_l$: Intermediate voltage of the DC line.

The following formula 2 indicates the mathematization of the DC system D based on this equivalent circuit.

[Formula 2]

$$Vd_{REC} = (L_d + L_l)\frac{d(Id_1)}{dt} + R_l Id_1 + V_l$$

$$Vd_{INV} = -(L_d + L_l)\frac{d(Id_2)}{dt} - R_l Id_2 + V_l$$

$$V_l = \frac{1}{C_l}\int (Id_1 - Id_2)dt$$

The following formula 3 indicates a transfer function that indicates the characteristic of the DC system D obtained by carrying out Laplace transformation on this formula 2, and arranging the transformation result.

(Formula 3)

$$Id_1 = P_{11}(s)Vd_{REC} + P_{12}(s)Vd_{INV}$$

$$Id_2 = P_{21}(s)Vd_{REC} + P_{22}(s)Vd_{INV}$$

In this case, $P_{11}(s)$ is a transfer function to the DC current $Id_1$ from the DC voltage $Vd_{REC}$, $P_{12}(s)$ is a transfer function to the DC current $Id_1$ from the DC voltage $Vd_{INV}$, $P_{21}(s)$ is a transfer function to the DC current $Id_2$ from the DC voltage $Vd_{REC}$, and $P_{22}(s)$ is a transfer function to the DC current $Id_2$ from the DC voltage $Vd_{INV}$.

In the above formula 3, when the DC voltage $Vd_{REC}$ is changed, as for the action to the DC current $Id_2$, it is apparent that the value obtained by multiplying the transfer function $P_{21}(s)$ by $Vd_{REC}$ acts. Hence, a change $\Delta Vd_{REC}$ of the DC voltage $Vd_{REC}$ by the oscillation suppressing circuit 20 is substituted in the formula 3 as $\Delta Vd_{REC} \cong -P_{21}(s)^{-1}$ $(\Delta\alpha I_{d2})$, and the following formula is obtained.

(Formula 4)

$$Id_2 = P_{21}(s)(Vd_{REC} + \Delta Vd_{REC}) + P_{22}(s)Vd_{INV}$$

$$= P_{21}(s)Vd_{REC} - \Delta\alpha Id_2 + P_{22}(s)Vd_{INV}$$

Based on the above formula 4, when the characteristic of the DC circuit characteristic calculating circuit 23 is set to be $P_{21}(s)^{-1}$ that is an inverse of the transfer function to the DC current $Id_2$ from the DC voltage $Vd_{REC}$, it becomes apparent that the output $\Delta\alpha_{Id2}$ by the filter circuit 22 can act on the DC current $Id_2$ without affecting on the characteristic $(P_{21}(s))$ of the DC circuit.

[2. Operation]

An operation of the control device for the power converter according to this embodiment will be described below. There is a relationship indicated in the following formula 5 between the control angle $\alpha_1$ and the DC voltage $Vd_1$ for the power converter 2a. In the formula 5, $V_{ac1}$ is a bus-line voltage of the AC system Aa, $X_1$ is a reactance of the transformer 1a, and the control angle for the power converter 2a is $\alpha_1 < \pi/2$.

[Formula 5]

$$Vd_1 = (\frac{3\sqrt{2}}{\pi} V_{ac1} \, cos\alpha_1 - \frac{3}{\pi} X_1 \, Id_1)$$

The DC circuit characteristic calculating circuit 23 reflects, on the differential value of the DC current $Id_2$, the reverse characteristic $P_{21}$ (s)$^{-1}$ of the influence of the DC voltage $Vd_{REC}$ on the DC current $Id_2$. The output $\Delta\alpha_{Id2}$' by the DC circuit characteristic calculating circuit 23 is input to the adder 16a, and is added to the control angle $\alpha_{1ACR}$ of the constant current control circuit 12a. Hence, the control angle $\alpha_1$ for the power converter 2a can be obtained from the control angle $\alpha_{1ACR}$ + the output $\Delta\alpha_{Id2}$'.

The output $\Delta\alpha_{Id2}$' by the oscillation suppressing circuit 20 compensates the characteristic of the DC circuit to the DC current $Id_2$ when the DC voltage $Vd_1$ is changed, when the oscillation waveform of the DC current $Id_2$ is increasing. Hence, the control angle $\alpha_1$ in the formula 5 increases, and this acts so as to decrease the DC voltage $Vd_1$ and decrease the DC current $Id_2$.

In contrast, the output $\Delta\alpha_{Id2}$' by the oscillation suppressing circuit 20 decreases the control angle $\alpha_1$ when the oscillation waveform of the DC current $Id_2$ is decreasing, which acts so as to increase the DC voltage $Vd_1$, and increase the DC current $Id_2$. As described above, the DC circuit characteristic calculating circuit 23 puts the reverse-characteristic component of the transfer function to the DC current $Id_2$ from the DC voltage $Vd_1$ in the control angle $\alpha_{1ACR}$ of the constant current control circuit 12a, thereby canceling an oscillation of the DC current $Id_2$.

[3. Action and Effect]

The action and effect of the above embodiment are as follows.

(1) The control device Ca that is for the power converter controls an AC-DC converter converting AC power into DC power between the two power converters 2a and 2b connected with each other via the DC line 3a, and includes the constant margin angle control circuit 10a controlling so as to maintain the constant margin angle for the power converter 2a, the constant voltage control circuit 11a controlling so as to cause the DC voltage of the DC line to be the predetermined DC voltage reference value, the constant current control circuit 12a controlling so as to cause the DC current of the DC line 3a to be the predetermined DC current reference value, the oscillation suppressing circuit 21 outputting the differential value of the DC current at the inverter side, the filter circuit 22 outputting the differential value of the frequency band at which a suppression of an oscillation is desired, the DC circuit characteristic calculating circuit 23 reflecting, on the differential value, the reverse characteristic of the transfer function from the DC voltage at the AC-DC converter-2a side to the DC current at the inverter side, the adder 16a adding the output by the constant current control circuit 12a and the output by the DC circuit characteristic calculating circuit 23, and the minimum value selecting circuit selecting the minimum value among the output by the constant margin angle control circuit 10a, the output by the adder 16a, and the output by the constant voltage control circuit 11a, and setting the selection result as the control angle for the above power converter.

According to the above structure, the output $\Delta\alpha_{Id2}$ obtained by applying, to the DC current $Id_2$ at the power converter 2b, the approximation differentiation and the filter is outputted to the DC circuit characteristics operational circuit 23 by the oscillation suppressing circuit 20. In the DC circuit characteristic calculating circuit 23, the reverse characteristic of the transfer function from the DC voltage $Vd_1$ to the DC current $Id_2$ is reflected on the $\Delta\alpha_{Id2}$, and the output $\Delta\alpha_{Id2}$' is applied to the output by the constant current control circuit 12a. When the DC current $Id_2$ oscillates, while the power converter 2a performs a constant current control, the DC voltage $Vd_1$ is changed so as to cause the DC current $Id_2$ to oscillate reversely relative to the oscillation of the DC current $Id_2$. That is, the reverse phase component by what corresponds to a change in the DC current $Id_2$ is applied to the input of the constant current control. Therefore, when the DC current $Id_2$ oscillates, the oscillation is promptly suppressed, thereby stabilizing DC power transmission.

(2) The oscillation suppressing circuit 20 includes the approximation differential value calculating circuit 21 calculating the differential value of the DC current at the inverter side, the filter circuit 22 outputting the differential value of the frequency band at which a suppression of an oscillation is desired in the DC current at the inverter side, and the DC circuit characteristic calculating circuit 23 reflecting the reverse characteristic of the transfer function from the DC voltage $Vd_1$ to the DC current $Id_2$. Addition of the output by the oscillation suppressing circuit 20 to the constant current control circuit 12b improves the damping performance, facilitating an oscillation to attenuate.

[Third Embodiment]

[1. Structure]

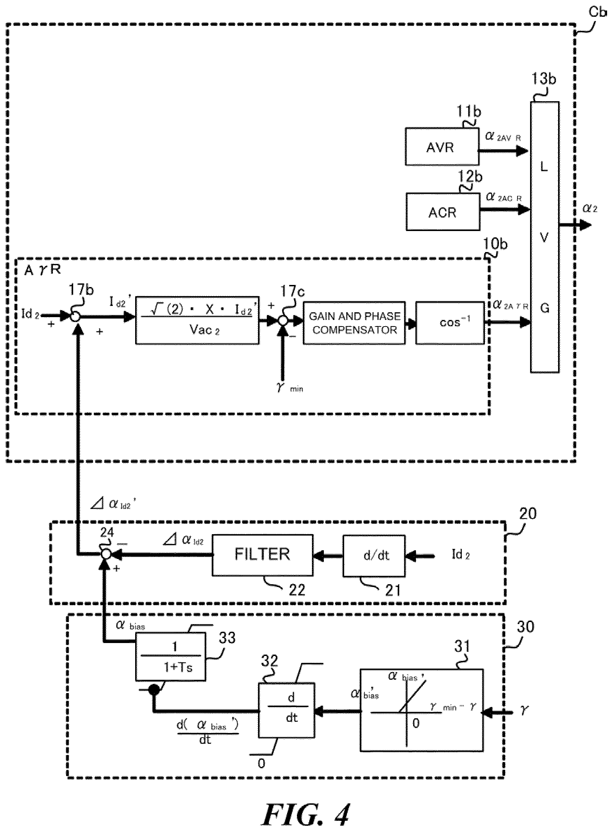

The structure of a control device for a power converter according to a third embodiment is basically the same as that of the first embodiment. As illustrated in FIG. 4, however, in addition to the oscillation suppressing circuit 20, an $\alpha_{bias}$ circuit 30 is provided. The $\alpha_{bias}$ circuit 30 outputs a bias that decreases the control angle $\alpha_2$ when the margin angle $\gamma$ is decreasing in addition to the DC current $Id_2$. The $\alpha_{bias}$ circuit 30 includes a $\gamma$-$\alpha_{bias}$' conversion circuit 31, an approximation differential value calculating circuit 32, and a primary delay circuit 33.

The $\gamma$-$\alpha_{bias}$' conversion circuit 31 temporarily decreases the control angle $\alpha_2$ when the DC current $Id_2$ oscillates and the margin angle $\gamma$ becomes equal to or smaller than a set value $\gamma$min stored beforehand. The margin angle $\gamma$ of the power converter 2b is input to the $\gamma$-$\alpha_{bias}$' conversion circuit 31. The $\gamma$-$\alpha_{bias}$' conversion circuit 31 output $\alpha_{bias}$' proportional to $\gamma$min-$\gamma$ when ($\gamma$min-$\gamma$) becomes equal to or greater than a constant value. The output $\alpha_{bias}$' by the $\gamma$-$\alpha_{bias}$' conversion circuit 31 is output to the approximation differential value calculating circuit 32.

The approximation differential value calculating circuit 32 is an approximation differential value calculating circuit with a limiter which obtains a differential value $d(\alpha_{bias}')/dt$ of the output $\alpha_{bias}$' by the $\gamma$-$\alpha_{bias}$' conversion circuit 31. The approximation differential value calculating circuit 32 outputs the differential value $d(\alpha_{bias}')/dt$ to the primary delay circuit 32 only when the differential value $d(\alpha_{bias}')/dt > 0$ so as to detect only the increase in the output $\alpha_{bias}$' by the $\gamma$-$\alpha_{bias}$' conversion circuit 31.

The primary delay circuit 33 is a circuit that has the lower limiter which is the output $d(\alpha_{bias}')/dt$ by the approximation differential value calculating circuit 32. The primary delay circuit 33 has the output $\alpha_{bias}$ gradually decreasing in accordance with a time constant T once $d(\alpha_{bias}')/dt > 0$ even if $d(\alpha_{bias}')/dt$ decreases thereafter. The output $\alpha_{bias}$ by the primary delay circuit 33 is output to a subtractor 24 of the oscillation suppressing circuit 20.

In addition to the approximation differential value calculating circuit 21 and the filter circuit 22, the oscillation suppressing circuit 20 includes the subtractor 24. The subtractor 24 subtracts the output $\alpha_{bias}$ by the $\alpha_{bias}$ circuit 30 from the output $\Delta\alpha_{Id2}$ by the oscillation suppressing circuit 20. The output $\Delta\alpha_{Id2}$' by the oscillation suppressing circuit 20 is output to the constant margin angle control circuit 10b.

The constant margin angle control circuit 10b includes adder 17b at the input side. The DC current $Id_2$ and the output $\Delta\alpha_{Id2}$' by the oscillation suppressing circuit 20 are input to the adder 17b and added by the adder. The adder 17b adds the DC current $Id_2$ and the output $\Delta\alpha_{Id2}$' by the oscillation suppressing circuit 20, and the constant margin angle control circuit 10b calculates the control angle using the output $Id_2$'. In addition, the adder 17c may be utilized instead of the adder 17b to add the DC current $Id_2$ and the output $\Delta\alpha_{Id2}$' by the oscillation suppressing circuit 20.

[2. Operation]

An operation of the control device for the power converter according to this embodiment will be described below. When the system voltage of the AC system Ab to which the power converter 2b that is a inverter is connected is lower than the normal voltage, the output $a_{2A\gamma R}$ by the constant margin angle control circuit 10b becomes smaller than the output $\alpha_{2AVR}$ by the constant voltage control circuit 11b at the control device Cb for the power converter 2b. Hence, the minimum value selecting circuit 13b outputs the output $\alpha_{2A\gamma R}$ by the constant margin angle control circuit 10b. The power converter 2b performs a constant margin angle control of maintaining the margin angle $\gamma$ in the following formula 6 as constant.

[Formula 6]

$$\gamma = \pi - \cos^{-1}\left(\cos(\alpha_2) - \frac{\sqrt{2}\,X_2 Id_2}{V_{ac2}}\right)$$

In this case, what is assumed is a case in which the DC current $Id_1$ and the DC current $Id_2$ keenly change due to a system failure, a stepwise change in the DC current setting value, etc., and the DC current $Id_1$ and the DC current $Id_2$ are affected by oscillation of the DC circuit, thus becoming oscillating. In this case, the oscillation suppressing circuit 20 stabilizes the DC current $Id_2$ of the power converter 2b that is operating under the constant margin angle control. In addition, the $\alpha_{bias}$ circuit 30 prevents, by the oscillation suppressing circuit 20, the power converter 2b from failing commutation.

That is, in the oscillation suppressing circuit 20, the approximation differential value calculating circuit 21 outputs the differential value $d(Id_2)/dt$ of the DC current $Id_2$. The filter circuit 22 applies, to the differential value $d(Id_2)/dt$, the filter (e.g., bandpass filter) set beforehand for the frequency band at which a suppression of an oscillation of the DC current $Id_2$ is desired. The output $\Delta\alpha_{Id2}$ obtained by the filter circuit 22 is output to the constant margin angle control circuit 10b via the subtractor 24.

Like the above embodiment, the output $\Delta\alpha_{Id2}$ by the filter circuit 22 becomes $\Delta\alpha_{Id2} > 0$ when the oscillation waveform of the DC voltage $Id_2$ is increasing. Hence, the control angle $\alpha_2$ in the formula 1 increases, and this acts so as to increase the DC voltage $Vd_2$. In contrast, the output $\Delta\alpha_{Id2}$ by the filter circuit 22 becomes $\Delta\alpha_{Id2} < 0$ when the oscillation waveform of the DC current $Id_2$ is decreasing. Hence, the control angle $\alpha_2$ in the formula 1 is decreased, and this acts so as to decrease the DC voltage $Vd_2$, and increase the DC current $Id_2$.

As is apparent from the foregoing, the output $\Delta\alpha_{Id2}$ by the filter circuit 22 increases the control angle $\alpha_2$ when the DC voltage $Id_2$ is increasing. That is, since the control angle $\alpha_2$ in the formula 1 becomes close to $\pi$, a commutation failure may occur the time of the constant margin angle control. Accordingly, when the DC current $Id_2$ oscillates and the margin angle $\gamma$ becomes equal to or smaller than the setting value, the $\alpha_{bias}$ circuit 30 temporarily decreases $\alpha_2$, thereby preventing a commutation failure.

That is, in FIG. 4, the $\gamma$-$\alpha_{bias}$' conversion circuit 31 of the $\alpha_{bias}$ circuit 30 outputs $\alpha_{bias}$' proportional to $\gamma min$-$\gamma$ when the margin angle $\gamma$ decreases and ($\gamma_{min}$-$\gamma$) becomes equal to or greater than a certain value. The approximation differential value calculating circuit 32 outputs the differential value $d(\alpha_{bias}')/dt$ only when the differential value $d(\alpha_{bias}')/dt > 0$, and detects only the increase in the output $\alpha_{bias}$' by the $\gamma$-$\alpha_{bias}$' conversion circuit 31.

The primary delay circuit 33 has the lower limit value that is the output $d(\alpha_{bias}')/dt$ by the differential value calculating circuit 32, and when $d(\alpha_{bias}')/dt > 0$, gradually decreases the output $\alpha_{bias}$ in accordance with the time constant T even if $d(\alpha_{bias}')/dt$ decreases. Hence, when the DC current $Id_2$ oscillates and $d(\alpha_{bias}')/dt > 0$, the $\alpha_{bias}$ circuit 30 outputs $\alpha_{bias}$ when the margin angle $\gamma$ is equal to or smaller than the certain value so as to act to prevent a commutation failure.

When the oscillation of the DC current $Id_2$ is suppressed and the margin angle $\gamma$ becomes unchanged, the output by the approximation differential value calculating circuit 32 becomes $d(\alpha_{bias}')/dt \cong 0$. In addition, the output by the primary delay circuit 33 also gradually decreases depending on the time constant T, and becomes $\alpha_{bias} = 0$. Hence, the $\alpha_{bias}$ circuit 30 does not act on the constant margin angle control circuit 10b in the stationary condition.

[3. Action and Effect]

The action and effect of the above embodiment are as follows.

(1) The control device Cb is for the power converter 2b that is a inverter converting DC power into AC power between the two power converters 2a and 2b connected with each other via the DC line 3a, and includes the constant margin angle control circuit 10b controlling so as to maintain the constant margin angle for the power converter 2b, the constant voltage control circuit 11b controlling so as to cause the DC voltage of the DC line 3a to be the predetermined DC voltage reference value, the constant current control circuit 12b controlling so as to cause the DC current of the DC line 3a to be the predetermined DC current reference value, the oscillation suppressing circuit 20 outputting the differential value of the DC current at the inverter side, the $\alpha_{bias}$ circuit 30 outputting the bias to the differential value, the adder 17b adding the output by the oscillation suppressing circuit 20, and the output by the $\alpha_{bias}$ circuit 30 to the input side of the constant margin angle control circuit 10b, and the minimum value selecting circuit 13b selecting the minimum value among the output by the constant margin angle control circuit 10b, the output by the constant voltage control circuit 11b, and the output by the constant current control circuit 12b, and setting the selection result as the control angle for the power converter 2b.

According to the above structure, the output $\Delta\alpha_{Id2}$ obtained by applying the approximation differentiation and the filter to the DC current $Id_2$ at the power converter 2b by the oscillation suppressing circuit 20 is applied to the output by the constant voltage control circuit 11b. When the DC current $Id_2$ oscillates, while the power converter 2b performs a constant voltage control, the DC voltage $Vd_2$ is changed so as to cause the DC current $Id_2$ to oscillate reversely to the oscillation of the DC current $Id_2$. That is, the reverse phase component by what corresponds to a change in the DC current $Id_2$ is applied to the input of the constant voltage control. Therefore, when the DC current $Id_2$ oscillates, the oscillation is promptly suppressed, thereby stabilizing DC power transmission.

In addition, the $\alpha_{bias}$ circuit 30 detects a decrease in the margin angle $\gamma$ and an oscillation, and has an offset value that temporarily decreases the control angle $\alpha_2$. This prevents the control angle $\alpha_2$ from increasing due to the output $\Delta\alpha_{Id2}$ by the oscillation suppressing circuit 20, thereby preventing the power converter 2b from failing a commutation.

(2) The oscillation suppressing circuit 20 includes the approximation differential value calculating circuit 21 calculating the differential value of the DC current at the inverter side, and the filter circuit 22 outputting the differential value of the frequency band at which a suppression of an oscillation is desired in the DC current at the inverter side. Addition of the differential value calculated by the approximation differential value calculating circuit 21 to the constant voltage control circuit 11b improves the damping performance, facilitating the oscillation to attenuate.

[Other Embodiments]

(1) In the above embodiments, the description has been given of a control device for a power converter, as for other forms, a program can be taken into consideration which causes a computer to execute the functions of the respective above circuits. That is, the control devices Ca and Cb can be accomplished by controlling a computer with a predetermined program or by a special purpose electronic circuit. The program in this case physically utilizes hardware of the computer, thereby accomplishing the process of each unit as described above. In addition, a method, a program, and a recording medium that records the program which execute the process of each unit are also the forms of the embodiment. Still further, how to set the range processed by hardware and the range processed by a software including a program is not limited to any particular form.

(2) Although several embodiments of the present disclosure have been described, those embodiments are presented as examples and are not intended to limit the scope of the present disclosure. Those embodiments can be carried out in other various forms, and various omissions, replacements, and modifications can be made thereto without departing from the scope of the present disclosure. Such embodiments and modified forms thereof are within the scope of the present disclosure, and also within the scope of the invention as recited in appended claims and the equivalent range thereto.

REFERENCE SIGNS LIST

Aa, Ab AC system
D DC system
Ca, Cb Control device for power converter
1a, 1b Transformer
2a, 2b Power converter
3a, 3b DC line
4a, 4b DC reactor
5a, 5b Voltage detector
6a, 6b Current detector
10a, 10b Constant margin angle control circuit
11a, 11b Constant voltage control circuit
12a, 12b Constant current control circuit
13a, 13bMinimum value selecting circuit
14a, 14b, 15a, 15b, 16a, 16b, 17b, 17c, 24 Adder or subtractor
20 Oscillation suppressing circuit
21 Approximation differential value calculating circuit
22 Filter circuit
23 DC circuit characteristic calculating circuit
30 $\alpha_{bias}$ circuit
31 $\gamma$-$\alpha_{bias}$' conversion circuit
32 Approximation differential value calculating circuit
33 Primary delay circuit

**Claims**

1. A control device for a power converter that is an inverter converting DC power into AC power between two power converters connected with each other via a DC line, the control device comprising:

   a constant margin angle control circuit controlling so as to maintain a constant margin angle for the power converter;
   a constant voltage control circuit controlling so as to cause a DC voltage of the DC line to be a predetermined DC voltage reference value;
   a constant current control circuit controlling so as to cause a DC current of the DC line to be a predetermined DC current reference value;

an oscillation suppressing circuit outputting a differential value of the DC current at the inverter side;
an adder adding an output by the constant voltage control circuit and an output by the oscillation suppressing circuit; and
a minimum value selecting circuit selecting a minimum value among an output by the constant margin angle control circuit, an output by the adder, and an output by the constant current control circuit, and setting the selection result as a control angle for the power converter.

2. A control device for a power converter that is an AC-DC converter converting AC power into DC power between two power converters connected with each other via a DC line, the control device comprising:

a constant margin angle control circuit controlling so as to maintain a constant margin angle for the power converter;
a constant voltage control circuit controlling so as to cause a DC voltage of the DC line to be a predetermined DC voltage reference value;
a constant current control circuit controlling so as to cause a DC current of the DC line to be a predetermined DC current reference value;
an oscillation suppressing circuit outputting a differential value of the DC current at an inverter side;
a DC circuit characteristic calculating circuit reflecting, on the differential value, a reverse characteristic of a transfer function from the DC voltage at the AC-DC converter side to the DC current at the inverter side;
an adder adding an output by the constant current control circuit and an output by the DC circuit characteristic calculating circuit; and
a minimum value selecting circuit selecting a minimum value among an output by the constant margin angle control circuit, an output by the adder, and an output by the constant voltage control circuit, and setting the selection result as a control angle for the power converter.

3. A control device for a power converter that is a inverter converting DC power into AC power between two power converters connected with each other via a DC line, the control device comprising:

a constant margin angle control circuit controlling so as to maintain a constant margin angle for the power converter;
a constant voltage control circuit controlling so as to cause a DC voltage of the DC line to be a predetermined DC voltage reference value;
a constant current control circuit controlling so as to cause a DC current of the DC line to be a predetermined DC current reference value;
an oscillation suppressing circuit outputting a differential value of the DC current at the inverter side;
an $\alpha_{bias}$ circuit outputting a bias to the differential value;
an adder adding an output by the oscillation suppressing circuit, and an output by the $\alpha_{bias}$ circuit to an input side of the constant margin angle control circuit; and
a minimum value selecting circuit selecting a minimum value among an output by the constant margin angle control circuit, an output by the constant voltage control circuit, and an output by the constant current control circuit, and setting the selection result as a control angle for the power converter.

4. The power-converter control device according to any one of claims 1 to 3, wherein the oscillation suppressing circuit comprises:

an approximation differential value calculating circuit calculating the differential value of the DC current at the inverter side; and
a filter circuit outputting the differential value of the frequency band at which a suppression of an oscillation is desired in the DC current at the inverter side.

**FIG. 1**

**FIG. 2**

# FIG. 3

**FIG. 4**

<table>
<tr><td colspan="2" align="center"><b>INTERNATIONAL SEARCH REPORT</b></td><td>International application No.<br>PCT/JP2016/053799</td></tr>
</table>

**A. CLASSIFICATION OF SUBJECT MATTER**
*H02M7/48*(2007.01)i, *H02J1/00*(2006.01)i, *H02J3/36*(2006.01)i

According to International Patent Classification (IPC) or to both national classification and IPC

**B. FIELDS SEARCHED**

Minimum documentation searched (classification system followed by classification symbols)
H02M7/48, H02J1/00, H02J3/36

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2001-197669 A (Electric Power Development Co., Ltd. et al.),<br>19 July 2001 (19.07.2001),<br>paragraphs [0032] to [0047]; fig. 3, 6 to 7<br>(Family: none) | 1-4 |
| A | JP 58-112475 A (The Tokyo Electric Power Co., Inc. et al.),<br>04 July 1983 (04.07.1983),<br>page 1, lower right column, line 7 to page 2, upper left column, line 15; fig. 1<br>(Family: none) | 1-4 |

☐ Further documents are listed in the continuation of Box C.     ☐ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>15 April 2016 (15.04.16) | Date of mailing of the international search report<br>26 April 2016 (26.04.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09046897 A

**Non-patent literature cited in the description**

- **TAKEHIKO MACHIDA.** DC power transmission optics. TOKYO DENKI University press, 30 January 1999, 151-154